# EUROPEAN PATENT SPECIFICATION

(11) **EP 1 354 928 B1**
(45) Date of publication and mention of the grant of the patent: **23.07.2008**
(21) Application number: 03008437.0
(22) Date of filing: 11.04.2003
(51) Int. Cl.: C09K 3/18, C23C 2/02

(54) **Liquid compositions for the treatment of metal surfaces**
Flüssige Zusammensetzungen zur Metalloberflächenbehandlung
Compositions liquides pour le traitement de surfaces métalliques

(30) Priority: 17.04.2002 IT MI20020803
(43) Date of publication of application: 22.10.2003
(73) Proprietor: Solvay Solexis S.p.A., 20121 Milano (IT)
(72) Inventor: Maccone, Patrizia, 20100 Milano (IT)
(74) Representative: Sama, Daniele

(56) References cited:
- EP-A- 0 273 449
- EP-A- 0 844 265
- EP-A- 1 006 168

## Description

The present invention relates to the use of liquid compositions for the treatment of metal surfaces.

Specifically the invention relates to the use of compositions of fluorinated products soluble in fluorinated fluids, capable to protect from corrosion metallic parts for example bearings, bushings, etc.

The use of fluorinated compounds for surface treatments in general, to give oleo- and hydrorepellence to the substratum, is known in the prior art. Alternatively, also the use of specific coatings such as metal, polymeric coatings, etc., suitable to protect the treated surface, is known.

It is known that the protection against humidity or sea air/sea water for metals is a particularly critical problem, especially in the storage phase.

In USP 6,221,434 it is described a series of functional perfluoropolyether derivatives for the various kind surface treatment, in order to give oleo- and hydrorepellence. Tests carried out by the Applicant have pointed out that said derivatives, even though they show good water-repellent properties, are ineffective to protect metals from corrosion (see the Examples).

As regards the protective coating use of metal parts, one generally distinguishes between polymeric and metal coatings. The polymeric coatings have the drawback that when they are used in moving mechanical parts,and therefore subjected to friction and wear, deteriorate in the time.

The metal coatings obtained by surface melting of valuable alloys, see for example USP 4,943,485, have the drawback to be very expensive. Furthermore they are not generally appliable, for example when used in transformer lamellar packages they modify the nature itself of the lamellas.

The need was therefore felt to have available compositions of additives appliable by a simple process, quickly, for example, by dipping, spraying, etc., capable to protect the metals from humidity and sea air/sea water.

Liquid compositions solving the above technical problem have been surprisingly and unespectedly found by the Applicant.

An object of the present invention are non aqueous liquid compositions, clear at room temperature, comprising:
(A) A fluorinated compound having the following general formula (I) 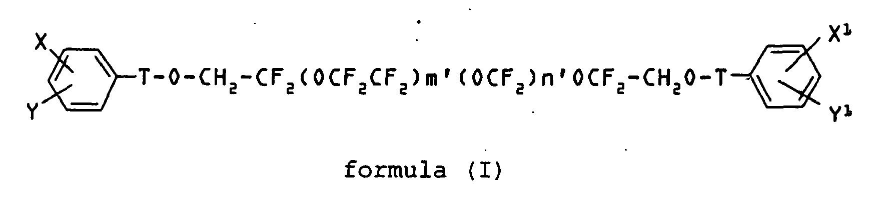 wherein:
   - T = (CH₂CH₂O)ₖ, (C₃H₆O)ₖ, wherein
      k and k' are integers in the range 0-10, extremes included, preferably 0-4;
   - X, Y, X¹, Y¹, equal to or different from each other are independently the one from the other H; NO₂; C₁-C₄ alkyl; C₁-C₄ alkoxy, with the proviso that at least one of X, Y, X¹, Y¹ is equal to NO₂;
   - m' and n' are integers, selected so that the number average molecular weight of the perfluoropolyether chain formed by the units with m' and n' indexes is from 66 to 10,000, preferably from 300 to 4,000;
(B) a fluorinated fluid, liquid at room temperature, having boiling point in the range 50°C-250°C, preferably 50°C-130°C, selected from the compounds having one of the following structures, and/or their mixtures:
   - R'-R_{f}-R (II)
      wherein:
      R' = -(O)ₙ₀-CₙF₂ₙH, n being an integer from 1 to 4, preferably 1 or 2; n0 is equal to 0, 1;
      R is selected between -CₙF₂ₙH, -CₘF₂ₘ₊₁; wherein
         - in the R, R' end groups one fluorine atom is optionally substituted with one chlorine atom;
         - n in R is as defined in R'; m is an integer from 1 to 3;
      R_{f} is selected from the following:
         - linear or branched perfluoroalkylene from 2 to 12 carbon atoms, containing at least one ether oxygen atom, in this case n0 in R' is preferably equal to zero;
         - perfluoropolyoxyalkylene comprising units statistically distributed in the chain, selected from the following:
            - (CFXO) wherein X = F or CF₃;
            - (CF₂(CF₂)_{d}O) wherein d is an integer comprised between 1 and 3;
            - (C₃F₆O);
            when R_{f} is perfluoropolyoxyalkylene n0 in R' is preferably equal to 1;
   - R_{f}¹-O-R_{H} (III)
      wherein:
      R_{f}¹ is a linear or branched perfluoroalkyl radical, optionally containing ether oxygen atoms, preferably having C_{Q}F_{2Q+1} structure, wherein Q is an integer from 4 to 7;
      R_{H} is a C_{P}H_{2P+1} hydrogenated radical wherein p is an integer from 1 to 10; preferably from 1 to 4.

In component (A) preferably m' is an integer comprised between 0 and 80, extremes included; n' is an integer comprised between 0 and 20, extremes included, with the proviso that both be not contemporaneously zero; the m'/n' ratio preferably being from 0.5 to 4, n' being different from zero. Still more preferably the number average molecular weight of the perlfuoropolyether chain of component (A) formed by the units with m' and n' indexes is in the range 1,500-2,500.

Preferably in component (A) X = Y = X¹ = Y¹ = NO₂ or X = X¹ = NO₂ and Y = Y¹ = H; preferably k and k' are equal to zero.

When component (B) is a formula (II) compound, and R_{f} is a perfluoropolyoxyalkylene, the unit (C₃F₆O) in R_{f} has the following meanings: (CF₂CF(CF₃)O), (CF(CF₃)CF₂O).

Preferably in the formula (II) compounds of component (B) R is selected from the following: -CF₂H, -CF₂CF₂H, -CFHCF₃.

Generally the formula (II) compounds have a number average molecular weight from 200 to 800, n0 of R' is equal to 1, R_{f} is a (per)fluoropolyether chain, it has preferably one of the following structures:
1) -(CF₂O)ₐ-(CF₂CF₂O)_{b}-
   when a is different from zero, then b/a is comprised between 0.3 and 10, extremes included; when a is equal to zero b is an integer as defined below;
   with R = -CₙF₂ₙH;
2) -(CF₂-(CF₂)_{z'}-CF₂O)_{b'}-
   wherein z' is an integer equal to 1 or 2; b' is as defined below;
3) -(C₃F₆O)ᵣ(C₂F₄O)_{b}-(CFL₀O)ₜ-
   L₀ = -F, -CF₃;
   when b and t are different from zero, r/b = 0.5-2.0 (r+b)/t = 10-30 and all the units with r, b, and t indexes are present;
   or b = t = 0 and r complies with the proviso mentioned below;
   or b = 0 and r and t are different from zero;
a, b, b', r, t, are integers such that, or whose sum is such that the formula (II) compound containing the bivalent radical R_{f} has boiling point in the above range.

The liquid invention compositions have an amount of component (A) such that it is soluble in component (B) and the composition results clear at room temperature.

The component (A) amount, soluble in component (B), expressed in % by weight, is generally from 0.01% to 50%, preferably from 0.1% to 15%.

The formula (I) products can be synthesized starting from a bifunctional (per)fluoropolyether, having hydroxyl end groups, converted into the corresponding alkaline alcoholate, for example potassium, and then reacted with a halogen-substituted aromatic compound having the substituents X, Y or X¹ and Y¹ as above. See for example C. Tonelli, P. Gavezotti, E. Strepparola, Journal of Fluorine Chemistry 95 (1999) 51-70, herein incorporated by reference.

Examples of compound (B) preparation are described in the prior art in patents US 3,704,214, US 3,715,378, US 5,969,192, and in patent application WO 96/22356.

For the protective treatment of metallic surfaces, the invention compositions are applied to the metal substratum, for example by dipping, spraying, spin coating. In particular the metal part to be protected is treated with the invention compositions, removing then the solvent for example by evaporation in the air and/or in a ventilated stove. The so treated metal can be used in the presence of water/humidity without showing corrosion phenomena.

It has been unexpectedly and surprisingly found by the Applicant that corrosion phenomena on the metallic surfaces treated with the present invention compositions do not even appear in the fog chamber test (see the characterization test reported in the Examples), even after residence times of the order of 300 hours and over.

The Applicant has found that other fluorinated additives used in the prior art for the metal treatment (see the comparative Examples) under the same conditions are not capable to protect from corrosion.

Generally after a time of 100 hours the metal surfaces treated with known fluorinated additives show corrosion phenomena in the above test. The results are still more unexpected if one considers that the invention fluorinated additives and those used in the comparative Examples show, on the treated metallic surfaces, substantially similar contact angle values against water, and that therefore the surfaces have comparable water-repellent properties.

With metals according to the present invention, materials are meant containing iron, such for example carbon steels, iron alloys, titanium alloys containing aluminum and vanadium, materials containing copper, etc.

The invention compositions also show the further advantage to be environmental safe since component (B) has an ODP equal to zero and a low GWP.

Optionally component (B) can be in admixture with perfluorooxyalkylene or perfluoroalkyl fluorinated fluids (Component (C)), liquid at room temperature, whose end groups optionally contain one chlorine atom at the place of one fluorine atom.

When the mixture of components (B) and (C) is used, the amount of component (C), expressed in percentage by weight with respect to (B) + (C), is from 0 to 50%, preferably from 0 to 30%. In this case the invention compositions have an effect on the GWP in function of the amount of (C).

The metal parts thus protected from corrosion with treatment with the invention compositions, show furthermore the advantage to be directly lubricated when used in mechanical systems wherein lubrication with (per)fluorinated fluids, for example oils or fluorinated greases, is required. In fact it has been found by the Applicant that it is not necessary to remove component (A) from the treated surface before lubrication since there is no interaction both of chemical nature and as regards the performances required in the use, between the protective agent and the lubricant.

Therefore with the invention compositions it is possible to avoid the protective agent removal before the piece lubrication. This allows to save on industrial scale, since one step is avoided, and to maintain on the piece the protection againts corrosion.

A series of explaining examples follows which are not limitative of the invention.

### EXAMPLES

### CHARACTERIZATION

### Determination of the static contact angle

The static contact angle measurements (θ°) have been carried out by the Drop Shape Analysis (DSA) instrument by Krüss at room temperature (23°C ± 0.5°C) by using, as measurement liquid, milliQ® (Millipore) water.

### Test in fog chamber

A series of carbon steel (C15) (UNI) plaques having 50x100x2 mm sizes are cleaned-and degreased with a cloth and n-hexane. The surface is polished with abrasive papers (400-800 mesh), then washed with water and dried. These plates are then treated by dipping with the composition to be tested and dried in a ventilated stove at 130°C for 2 h. They are then placed in the fog chamber. The fog chamber is formed by a sprayer, connected to a water reserve, which by compressed air (P = 3 atm) is capable to saturate with humidity the chamber at the temperature of 35°C. The plaques are left in the closed and saturated with humidity chamber for the established time and are controlled at regular intervals by visual inspection. The test evaluation is expressed according to the following score:
(0) no rust trace;
(1) one/three corrosion dots having a diameter lower than 1 mm;
(2) three stains having a diameter higher than 1 mm or more stains having a diameter lower than 1 mm for a total of corroded surface lower than 1%;
(3) four or five stains having a diameter higher than 1 mm or more stains having a diameter lower than 1 mm for a total of corroded surface comprised between 1% and 5%;
(4) corroded surface comprised between 5% and 10%;
(5) corroded surface higher than 10%.

### Corrosion test in sea water

One carbon steel plaque (C15) (UNI) having 50x100x2 mm sizes is prepared by cleaning and degreasing with a cloth and n-hexane. The surface is polished with abrasive papers (400-800 mesh) and then washed with water and dried.

The plaque is then half dipped in the treatment solution and hung to dry in a ventilated stove or in air to remove the solvent. The dried plaque is completely dipped, at room temperature, in a 500 cc glass filled with sea water. After 24 hours one observes the metal surface aspect. The test is passed if no corrosion presence is observed.

The sea water is prepared in laboratory as described in the ASTM D 665 method (Procedure B) and it has the following composition:

| Salt | g/l |
|---|---|
| NaCl | 24.54 |
| MgCl₂·6H₂O | 11.10 |
| Na₂SO₄ | 4.09 |
| CaCl₂ | 1.16 |
| KCl | 0.69 |
| NaHCO₃, | 0.20 |
| KBr | 0.10 |
| H₃BO₃ | 0.03 |
| SrCl₂·6H₂O | 0.04 |
| NaF | 0.003 |

### EXAMPLE 1

### Corrosion test in fog chamber of a metallic plaque previously treated with the present invention composition

A composition according to the present invention has been used, wherein component (A) having the following structure: 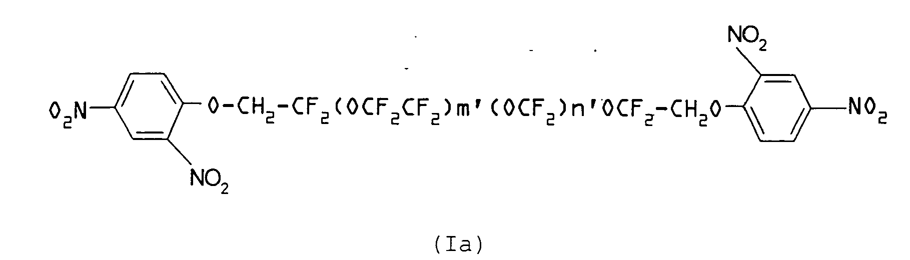 having molecular weight 2,380 and m' / n' = 1, has been solubilized at concentration 1% by weight in compound (B) having the following formula:
HCF₂O(CF₂CF₂O)_{1,8}(CF₂O)_{0,2}CF₂H
and b.p. 85°C.

A carbon steel plaque C15 (UNI) has been treated with the above composition as described in the fog chamber test. Before transferring the plaque in the fog chamber for the test, the presence of the fluorinated compound on the plaque surface has been checked, measuring the static contact angle against water. The value of θ° and of score in the fog chamber test are reported in Table 1 after an exposure time of the plaque of 24 h and 96 h respectively.

### EXAMPLE 2 (comparative)

An untreated plate (control) has been used for the test in fog chamber. The same determinations of Example 1 have been carried out. The results are reported in Table 1.

### EXAMPLE 3 (comparative)

Preparation of a composition having a hydro/oleorepellent activity according to USP 6,221,434 containing a bifunctional fluoropolyether phosphate derivative.

Example 1 has been repeated using an aqueous composition containing 4% by weight of isopropyl alcohol, and 1% by weight of fluorinated additive having the following formula:
(1) (HO)₂P(O)-[CH₂O(C₂H₅O)_{1,5}]-(CF₂O)₈-(C₂F₄O)₈-CF₂-
[CH₂O(C₂H₅O)_{1,5}]-P(O)-(OH) ₂

Said composition, as said, is used for the surface hydro/oleorepellent treatment according to USP 6,221,434.

The obtained results are reported in Table 1.

### Example 4 (comparative)

Preparation of a composition having a hydro/oleorepellent activity according to USP 6,221,434 containing a bifunctional fluoropolyether stearylamide derivative

Example 1 has been repeated by using a composition containing 1% by weight of fluorinated additive having the following formula:

(2) H₃₇C₁₈HNOC-CF₂O(CF₂O)₈-(C₂F₄O)₈-CF₂-CONHC₁₈H₃₇

in a hydrocarbon solution.

The obtained results are reported in Table 1.

The results of Table 1 show that the water-repellent treatment of a metallic surface does not guarantee the surface protection from corrosion; furthermore the Table shows that fluoropolyether derivatives conferring to a metallic surface the same water-repellence degree have a different efficacy as anticorrosion agents.

### EXAMPLE 5

### Corrosion test in sea water of a metallic plaque previously treated with the present invention composition

The corrosion test in sea water as previously described has been carried out. The invention composition contains 3% by weight of compound (Ia), and 97% by weight of component (B) used in Example 1.

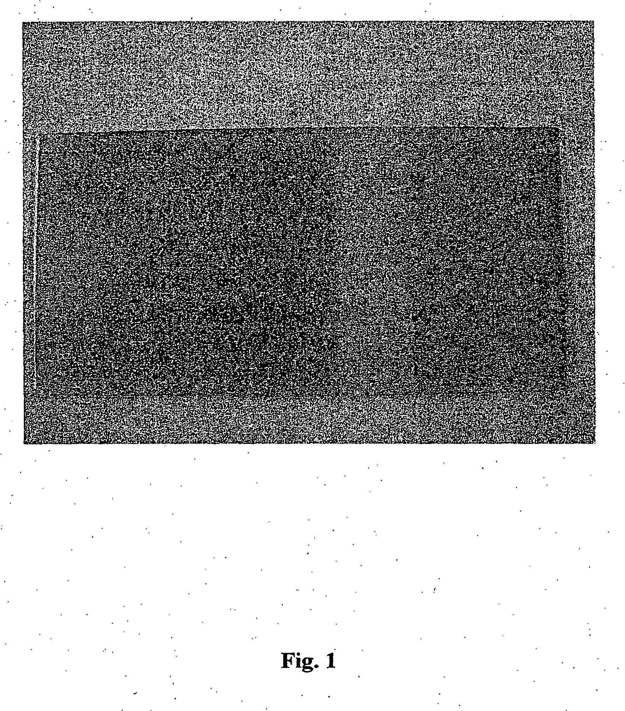

At the end of the test (24 hours) it has been observed that the part of the plaque not treated was completely rusted, while the treated part had no corrosion signs (Fig. 1).

### EXAMPLE 6

### Test in fog chamber of a plaque treated with the invention composition and successively lubricated with a perfluoropolyether oil

A composition according to the invention, containing 5% by weight of the formula (Ia) compound and 95% by weight of component (B) used in Example 1 is applied on a carbon steel plaque C15 (UNI).

Before carrying out the test, the treated plaque is lubricated with perfluoropolyether oil Fomblin® M30.

The obtained results are reportd in Table 2.

### EXAMPLE 7 (comparative)

The same kind of plaque used in Example 6, without treatment with the invention composition, has been directly lubricated with perlfuoropolyether oil Fomblin® M30 and then subjected to the fog chamber test.

The obtained results are reported in Table 2.

Table 2 shows that the applied lubricating oil does not interact with the plaque surface treatment, carried out as described in Example 6, since the plaque resists to corrosion, differently from the plaque of Example 7 (comparative) on which the surface treatmet has not been performed.

### EXAMPLE 8

### Test in the fog chamber of ball bearings treated with the invention composition

The outer race of a ball bearing mod. SKF 1306 EKTNO/C3 has been treated by dipping with an invention composition having 10% by weight of formula (1a) compound and 90% by weight of component (B) of formula C₄F₉OC₂H₅.

After having removed the solvent, the outer race has been transferred to the fog chamber.

After exposure of 72 hours no corrosion signs have been observed on the piece.

### EXAMPLE 9 (comparative)

### Fog chamber test of ball bearings not treated with the invention composition

Example 8 has been repeated without carrying out the treatment with the present invention composition.

After exposure of 72 hours the piece was completely corroded.

**Table 1**

| Ex. | Used compound | θ° vs. water | Test in fog chamber | |
|---|---|---|---|---|
| | | | After 24 hours | After 96 hours |
| 1 | (Ia) | 104° | 0 | 0 |
| 2 (comp) | (control) | 96° | 3 | 5 |
| 3 (comp) | (1) | 110° | 0 | 3 |
| 4 (comp) | (2) | 113° | 0 | 2 |

**Table 2**

| Ex. | Treatment | Test in fog chamber | | |
|---|---|---|---|---|
| | | After 48 h | After 168 h | After 336 h |
| 6 | Plaque + Invention Compos. + Lubricant | 0 | 0 | 0 |
| 7 (comp) | Plaque + lubricant | 2 | 4 | 5 |

## Claims

1. Non aqueous compositions, limpid at room temperature, comprising:
(A) a fluorinated compound having the following general formula: 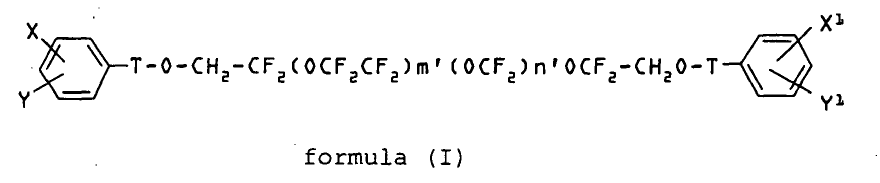 wherein:
- T = (CH₂CH₂O)ₖ, (C₃H₆O)_{k'} wherein
k and k' are integers in the range 0-10 extremes included, preferably 0-4;
- X, Y, X¹, Y¹, equal to or different from each other are independently the one from the other H; NO₂; C₁-C₄ alkyl; C₁-C₄ alkoxy, with the proviso that at least one of X, Y, X¹, Y¹ is equal to NO₂;
- m' and n' are integers, selected so that the number average molecular weight of the perfluoropolyether chain formed by the units with m' and n' indexes is from 66 to 10,000, preferably from 300 to 4,000;
(B) a fluorinated fluid, liquid at room temperature, having boiling point in the range 50°C-250°C, preferably 50°C-130°C, selected from the compounds having one of the following structures, and/or mixtures thereof:
-
R'-R_{f}-R (II)
wherein:
R' = -(O)ₙ₀-CₙF₂ₙH, n being an integer from 1 to 4, preferably 1 or 2; n0 is equal to 0, 1;
R is selected between -CₙF₂ₙH, -CₘF₂ₘ₊₁; wherein:
- in the R, R' end groups one fluorine atom is optionally substituted with one chlorine atom;
- n in R is as defined in R'; m is an integer from 1 to 3;
R_{f} is selected from the following:
- linear or branched perfluoroalkylene from 2 to 12 carbon atoms, containing at least one ether oxygen atom, in this case n0 in R' is preferably equal to zero;
- perfluoropolyoxyalkylene comprising units statistically distributed in the chain, selected from the following:
- (CFXO) wherein X = F or CF₃;
- (CF₂(-CF₂)_{d}O) wherein d is an integer comprised between 1 and 3;
- (C₃F₆O);
when R_{f} is perfluoropolyoxyalkylene n0 in R' is preferably equal to 1;
-
R_{f}¹-O-R_{H} (III)
wherein:
R_{f}¹ is a linear or branched perfluoroalkyl radical, optionally containing ether oxygen atoms, preferably having C_{Q}F_{2Q+1} structure, wherein Q is an integer from 4 to 7;
R_{H} is a C_{P}H_{2P+1} hydrogenated radical wherein p is an integer from 1 to 10, preferably from 1 to 4.

2. Compositions according to claim 1, wherein in the component (A) m' is an integer comprised between 0 and 80, extremes included; n' is an integer comprised between 0 and 20, extremes included, with the proviso that both be not contemporaneously zero; the m'/n' ratio preferably being from 0.5 to 4 n' being different from zero.

3. Compositions according to claims 1-2, wherein the number average molecular weight of the perfluoropolyether chain formed by the units with m' and n' indexes is comprised between 1,500 and 2,500.

4. Compositions according to claims 1-3, wherein in component (A) X = Y = X¹ = Y¹ = NO₂; or X = X¹ = NO₂ and Y = Y¹ = H; k and k' being equal to zero.

5. Compositions according to claims 1-4, wherein in the formula (II) compounds of.component (B) R is selected from the following: -CF₂H, -CF₂CF₂H, -CFHCF₃.

6. Compositions according to claim 5, wherein the formula (II) compounds have a number average molecular weight from 200 to 800, n0 of R' is equal to 1, R_{f} is a (per)fluoropolyether chain having one of the following structures:
1)
-(CF₂O)ₐ-(CF₂CF₂O)_{b}-
when a is different from zero, then b/a is comprised between 0.3 and 10, extremes included; when a is equal to zero b is an integer as defined below;
R = -CₙF₂ₙH;
2)
-(CF₂-(CF₂)_{z'}-CF₂O)_{b'}-
wherein z' is an integer equal to 1 or 2; b' is as defined below;
3)
-(C₃F₆)ᵣ-(C₂F₄O)_{b}-(CFL₀O)ₜ-
L₀ = -F, -CF₃;
when b and t are different from zero r/b = 0.5-2.0 (r+b)/t = 10-30 and all the units with r, b, and t indexes are present;
or b = t = 0 and r complies with the proviso mentioned below;
or b = 0 and r and t are different from zero;
a, b, b', r, t, are integers such that, or whose sum is such that the formula (II) compounds containing the bivalent radical R_{f} have boiling point in the above range.

7. Compositions according to claims 1-6, wherein the component (A) amount soluble in component (B), expressed in % by weight, is comprised between 0.01% and 50%, preferably between 0.1% and 15%.

8. Compositions according to claims 1-7, wherein component (B) is in admixture with perfluorooxyalkylene or perfluoroalkyl fluorinated fluids (Component (C)), liquid at room temperature, wherein the end groups optionally contain one chlorine atom at the place of one fluorine atom.

9. Compositions according to claim 8, wherein when the mixture of components (B) and (C) is used, the amount of component (C), expressed in percentage by weight with respect to (B) + (C), is from 0 to 50%, preferably from 0 to 30%.

10. Use of the compositions according to claims 1-9, to treat metal surfaces.

11. Metal surfaces obtainable according to claim 10.

## Patentansprüche

1. Bei Raumtemperatur klare nichtwäßrige Zusammensetzungen, enthaltend :
(A) eine fluorierte Verbindung der folgenden allgemeinen Formel : 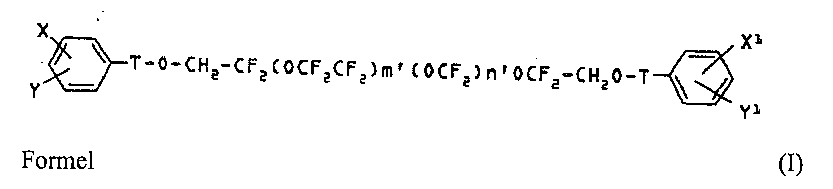 worin:
- T = (CH₂CH₂O)ₖ, (C₃H₆O)_{k'}, worin
k und k' für ganze Zahlen im Bereich von 0-10 einschließlich der Extrema, vorzugsweise 0-4, stehen;
- X, Y, X¹ und Y¹ gleich oder voneinander verschieden sind und unabhängig voneinander für H; NO₂ C₁-C₄-Alkyl; C₁-C₄-Alkoxy stehen mit der Maßgabe, daß mindestens eine der Gruppen X, Y, X¹ und Y¹ gleich NO₂ ist;
- m' und n' für ganze Zahlen stehen, die so gewählt sind, daß das zahlenmittlere Molekulargewicht der durch die Einheiten mit den Indizes m' und n' gebildeten Perfluorpolyetherkette 66 bis 10.000, vorzugsweise 300 bis 4.000, beträgt;
(B) ein bei Raumtemperatur flüssiges fluoriertes Fluid mit einem Siedepunkt im Bereich von 50°C-250°C, vorzugsweise 50°C-130°C, ausgewählt aus den Verbindungen mit einer der folgenden Strukturen und/oder Mischungen davon :
-
R'-R_{f}-R (II),
worin :
R' = -(O)ₙ₀-CₙF₂ₙH, wobei n für eine ganze Zahl von 1 bis 4, vorzugsweise 1 oder 2, steht; n0 gleich 0, 1 ist;
R zwischen -CₙF₂ₙH, -CₘF₂ₘ₊₁ ausgewählt ist, worin :
- in den Endgruppen R und R' ein Fluoratom gegebenenfalls durch ein Chloratom ersetzt ist;
- n in R wie in R' definiert ist; m für eine ganze Zahl von 1 bis 3 steht;
R_{f} aus den folgenden Gruppen ausgewählt ist :
- lineares oder verzweigtes Perfluoralkylen mit 2 bis 12 Kohlenstoffatomen und mindestens einem Ethersauerstoffatom, wobei in diesem Fall n0 in R' vorzugsweise gleich null ist;
- Perfluorpolyoxyalkylen, das eine oder mehrere unter den folgenden Einheiten ausgewählte Einheiten statistisch in der Kette verteilt enthält :
- (CFXO), worin X = F, CF₃;
- (CF₂(CF₂)_{d}O), worin d für eine ganze Zahl zwischen 1 und 3 steht;
- (C₃F₆O);
wobei dann, wenn R_{f} für Perfluorpolyoxyalkylen steht, n0 in R' vorzugsweise gleich 1 ist;
-
R_{f}¹-O-R_{H} (III),
worin :
R_{f}¹ für einen linearen oder verzweigten Perfluoralkylrest, der gegebenenfalls Ethersauerstoffatome enthält, vorzugsweise mit der Struktur C_{Q}F_{2Q+1}, worin Q für eine ganze Zahl von 4 bis 7 steht, steht;
R_{H} für einen hydrierten Rest C_{P}H_{2P+1}, worin p für eine ganze Zahl von 1 bis 10, vorzugsweise 1 bis 4, steht, steht.

2. Zusammensetzungen nach Anspruch 1, wobei in der Komponente (A) m' für eine ganze Zahl zwischen 0 und 80 einschließlich der Extrema steht; n' für eine ganze Zahl zwischen 0 und 20 einschließlich der Extrema steht, mit der Maßgabe, daß beide nicht gleichzeitig null sein können; wobei das Verhältnis m'/n' vorzugsweise 0,5 bis 4 beträgt, wobei n' von null verschieden ist.

3. Zusammensetzungen nach den Ansprüchen 1-2, wobei das zahlenmittlere Molekulargewicht der durch die Einheiten mit den Indizes m' und n' gebildeten Perfluorpolyetherkette zwischen 1.500 und 2.500 liegt.

4. Zusammensetzungen nach den Ansprüchen 1-3, wobei in Komponente (A) X = Y = X¹ = Y¹ = NO₂ oder X = X¹ = NO₂ und Y = Y¹ = H; wobei k und k' gleich null sind.

5. Zusammensetzungen nach den Ansprüchen 1-4, wobei in den Verbindungen der Formel (II) von Komponente (B) R aus den folgenden Gruppen ausgewählt ist: -CF₂H, -CF₂CF₂H, -CFHCF₃.

6. Zusammensetzungen nach Anspruch 5, wobei die Verbindungen der Formel (II) ein zahlenmittleres Molekulargewicht von 200 bis 800 aufweisen, n0 von R' gleich 1 ist, R_{f} für eine (Per)fluorpolyetherkette mit einer der folgenden Strukturen steht :
1)
-(CF₂O)ₐ-(CF₂CF₂O)_{b}-,
dann, wenn a von null verschieden ist, b/a zwischen 0,3 und 10 einschließlich der Extrema liegt; dann, wenn a gleich null ist, b für eine ganze Zahl gemäß nachstehender Definition steht;
R = -CₙF₂ₙH;
2)
-(CF₂-(CF₂)_{z},-CF₂O)_{b}-,
worin z' für eine ganze Zahl mit einem Wert von 1 oder 2 steht; b' wie nachstehend definiert ist;
3)
-(C₃F₆O)ᵣ-(C₂F₄O)_{b}-(CFL₀O)ₜ-,
L₀ = -F, CF₃;
dann, wenn b und t von null verschieden sind, r/b = 0,5-2,0, (r+b)/t = 10-30 und alle Einheiten mit den Indizes r, b und t vorhanden sind;
oder b = t = 0 und r der nachstehend angegebenen Maßgabe entspricht;
oder b = 0 und r und t von null verschieden sind;
a, b, b', r und t für solche ganzen Zahlen stehen oder deren Summe einen solchen Wert hat, daß die den zweiwertigen Rest R_{f} enthaltenden Verbindungen der Formel (II) einen Siedepunkt in dem obigen Bereich aufweisen.

7. Zusammensetzungen nach den Ansprüchen 1-6, wobei die in Komponente (B) lösliche Menge an Komponente (A), ausgedrückt in Gew.-%, zwischen 0,01 und 50%, vorzugsweise zwischen 0,1 und 15%, liegt.

8. Zusammensetzungen nach den Ansprüchen 1-7, wobei Komponente (B) in Abmischung mit bei Raumtemperatur flüssigen fluorierten Perfluoroxyalkylen- oder Perfluoralkylfluiden (Komponente (C)), worin die Endgruppen gegebenenfalls anstelle eines Fluoratoms ein Chloratom enthalten.

9. Zusammensetzungen nach Anspruch 8, wobei bei Verwendung der Mischung von Komponenten (B) und (C) die Menge an Komponente (C), ausgedrückt in Gewichtsprozent bezogen auf (B) + (C), 0 bis 50%, vorzugsweise 0 bis 30%, beträgt.

10. Verwendung der Zusammensetzungen nach den Ansprüchen 1-9 zur Behandlung von Metalloberflächen.

11. Metalloberflächen, die gemäß Anspruch 10 erhältlich sind.

## Revendications

1. Compositions, non aqueuses, limpides à température ambiante comprenant :
(A) un compose fluoré ayant la formule générale suivante : 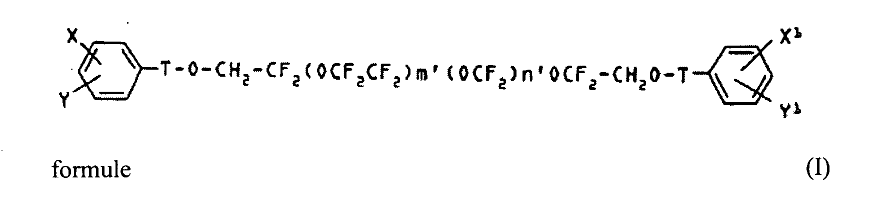 dans laquelle :
- T = (CH₂CH₂O)ₖ, (C₃H₆O)_{k'} où
k et k' sont des entiers dans la plage de 0 à 10, les valeurs extrêmes étant incluses, de préférence de 0 à 4 ;
- X, Y, X¹, Y¹, égaux ou différents entre eux sont indépendamment l'un de l'autre H ; NO₂; un alkyle en C₁-C₄ ; un alcoxy en C₁-C₄, à la condition qu'au moins un de X, Y, X¹, Y¹ soit égal à NO₂ ;
- m' et n' sont des entiers, choisis de sorte que la masse moléculaire moyenne en nombre de la chaîne perfluoropolyéther formée par les unités avec des indices m' et n' soit de 66 à 10 000, de préférence de 300 à 4 000 ;
(B) un fluide fluoré, liquide à température ambiante, ayant un point d'ébullition dans la plage de 50 °C à 250 °C, de préférence de 50 °C à 130 °C, choisi parmi les composés ayant l'une des structures suivantes, et/ou des mélanges de ceux-ci :
-
R'-R_{f}-R (II)
dans laquelle :
R' = -(O)ₙ₀-CₙF₂ₙH, n étant un entier de 1 à 4, de préférence 1 ou 2 ; n0 est égal à 0, 1 ;
R est choisi entre -CnF₂ₙH, -CₘF₂ₘ₊₁ ; où :
- dans les groupes terminaux R, R' un atome de fluor est éventuellement substitué par un atome de chlore ;
- n dans R est tel que défini dans R' ; m est un entier de 1 à 3 ;
R_{f} est choisi parmi les suivants :
- perfluoroalkylène linéaire ou ramifié de 2 à 12 atomes de carbone, contenant au moins un atome d'oxygène de l'éther, dans ce cas n0 dans R' est de préférence égal à zéro ;
- perfluoropolyoxyalkylène comprenant des unités statistiquement réparties dans la chaîne, choisies par les suivants :
- (CFXO) où X = F ou CF₃ ;
- (CF₂(CF₂)_{d}O) où d est un entier compris entre 1 et 3 ;
- (C₃F₆O);
lorsque R_{f} est un perfluoropolyoxyalkylène, n0 dans R' est de préférence égal à 1 ;
-
R_{f}¹-O-R_{H} (III)
dans laquelle :
R_{f}¹ est un radical perfluoroalkyle linéaire ou ramifié, contenant éventuellement des atomes d'oxygène de l'éther, de préférence ayant une structure C_{Q}F_{2Q+1}, dans laquelle Q est un entier de 4 à 7 ;
R_{H} est un radical hydrogéné CₚH₂ₚ₊₁ dans lequel p est un entier de 1 à 10, de préférence de 1 à 4.

2. Compositions selon la revendication 1, dans lesquelles dans le composant (A), m' est un entier compris entre 0 et 80, les valeurs extrêmes étant incluses ; n' est un entier compris entre 0 et 20, les valeurs extrêmes étant incluses, à la condition que tous deux ne soient pas simultanément égaux à zéro ; le rapport m'/n' étant de préférence de 0,5 à 4, n' étant différent de zéro.

3. Compositions selon les revendications 1 à 2, dans lesquelles, la masse moléculaire moyenne en nombre de la chaîne perfluoropolyéther formée par les unités avec des indices m' et n' soit comprise entre 1 500 et 2 500.

4. Compositions selon les revendications 1 à 3, dans lesquelles dans le composant (A) X = Y = X¹ = Y¹ = NO₂ ; ou X = X¹ = NO₂ et Y = Y¹ = H ; k et k' étant égaux à zéro.

5. Compositions selon les revendications 1 à 4, dans lesquelles dans, les composés de formule (II) du composant (B), R est choisi parmi les suivants : -CF₂H, -CF₂CF₂H, -CFHCF₃.

6. Compositions selon la revendication 5, dans laquelle les composés de formule (II) ont une masse moléculaire moyenne en nombre de 200 à 800, n0 de R' est égal à 1, R_{f} est une chaîne (per)fluoropolyéther ayant l'une des structures suivantes :
1)
(CF₂O)ₐ-(CF₂CF₂O)_{b}-
lorsque a est différent de zéro, alors b/a est compris entre 0,3 et 10, les valeurs extrêmes étant incluses ; lorsque a est égal à zéro, b est un entier tel que défini ci-dessous ;
R = -CₙF₂ₙH ;
2)
-(CF₂-(CF₂)_{z'}-CF₂O)_{b'}-
dans laquelle z' est un entier égal à 1 ou 2 ; b' est tel que défini ci-dessous ;
3)
-(C₃F₆O)ᵣ-(C₂F₄O)_{b}-(CFL₀O)ₜ-
L₀ = -F, -CF₃ ;
lorsque b et t sont différents de zéro, r/b = 0,5 à 2,0, (r+b) / t = 10 à 30 et toutes les unités avec des indices r, b, et t sont présentes ;
ou b = t = 0 et r satisfait à la condition mentionnée ci-dessous ;
ou b = 0 et r et t sont différents de zéro ;
a, b, b', r, t, sont des entiers, de sorte que, ou dont la somme est telle que les composés de formule (II) contenant le radical bivalent R_{f} ont un point d'ébullition dans la plage ci-dessus.

7. Compositions selon les revendications 1 à 6, dans lesquelles la quantité de composant (A) soluble dans le composant (B), exprimée en % en poids, est comprise entre 0,01 % et 50 %, de préférence entre 0,1 % et 15 %.

8. Compositions selon les revendications 1 à 7, dans lesquelles le composant (B) est en mélange avec du perfluoro-oxyalkylène ou des fluides fluorés de perfluoroalkyle (Composant (C)), liquides à température ambiante, où les groupes terminaux contiennent éventuellement un atome de chlore à la place d'un atome de fluor.

9. Compositions selon la revendication 8, dans lesquelles le mélange des composants (B) et (C) est utilisé, la quantité de composant (C), exprimée en pourcentage en poids par rapport à (B) + (C), est de 0 à 50 %, de préférence de 0 à30%.

10. Utilisation des compositions selon les revendications 1 à 9, pour traiter des surfaces métalliques.

11. Surfaces métalliques pouvant être obtenues selon la revendication 10.
